# EUROPÄISCHE PATENTSCHRIFT

(11) **EP 1 072 491 B1**
(45) Veröffentlichungstag und Bekanntmachung des Hinweises auf die Patenterteilung: **09.03.2005**
(21) Anmeldenummer: 00114006.0
(22) Anmeldetag: 04.07.2000
(51) Int. Cl.: B60T 8/40, B60T 13/66

(54) **Verfahren und Vorrichtung zur Ansteuerung eines ein Druckmedium in einem Fahrzeugbremssystem fördernden Mittels abhängig von der Fahrzeuggeschwindigkeit**
Method and device for controlling a means to supply a pressurized medium in a vehicle braking system dependent on the vehicle speed
Procédé et dispositif pour commander des moyens alimentant un milieu sous pression dans un système de freinage de véhicule dépendant de la vitesse du véhicule

(30) Priorität: 29.07.1999 DE 19935373
(43) Veröffentlichungstag der Anmeldung: 31.01.2001
(73) Patentinhaber: ROBERT BOSCH GMBH, 70442 Stuttgart (DE)
(72) Erfinder: Hachtel, Juergen, 74219 Moeckmuehl (DE)

(56) Entgegenhaltungen:
- EP-A- 0 469 615
- EP-A- 1 004 493
- WO-A-97/39931

## Beschreibung

### Stand der Technik

Die vorliegende Erfindung betrifft Verfahren und Vorrichtung zur Ansteuerung eines ein Druckmedium in einem Fahrzeugbremssystem fördernden Mittels zur Einstellung eines zur Verfügung stehenden Volumens an Druckmedium gemäß den Oberbegriffen der unabhängigen Ansprüche.

### Stand der Technik

Die DE 44 40 517 A1 zeigt ein Verfahren und eine Vorrichtung zur Ansteuerung einer Rückförderpumpe einer Bremsanlage, bei der die Rückförderpumpe abhängig von der Stellgröße und/oder der Regelabweichung eines Schlupfreglers und/oder eines die Fahrgeschwindigkeit eines Fahrzeugs beeinflußbaren Reglers steuerbar ist. Dabei gibt beispielsweise ein Fahrgeschwindigkeitsregler bzw. ein Fahrgeschwindigkeitsbegrenzer ein Signal an ein ABS/ASR-System, das einen gewünschten Bremseingriff und/oder ein gewünschtes Bremsmoment anzeigt. Ein entsprechendes Signal das einen Bremseingriff anzeigt, kann auch von weiteren Systemen, beispielsweise einer Fahrdynamikregelung geliefert werden. Es ist nun vorgesehen, daß bei solchen Systemen bei einem aktiven Bremseingriff der Druckaufbau über den Pumpenmotor bestimmt wird, wobei die Rückförderpumpe abhängig vom Bedarf beim Druckaufbau angesteuert wird. Somit wird die Rückförderpumpe im gerade aktiven Bremseingriff abhängig von der Regelabweichung eines Reglers, der das Bremsmoment und/oder die Raddrehzahl beeinflusst angesteuert.

Aus der WO 97/39931 ist ein Verfahren zur Steuerung eines elektro-hydraulischen Bremssystem bekannt, welches eine Pumpe enthält, die ein Druckmedium in einen Druckspeicher lädt. Dabei wird die Beladung des Speichers in Abhängigkeit von der Fahrzeuggeschwindigkeit innerhalb geeigneter Ein- und Ausschaltschwellen durchgeführt. Der Druck, der durch den Pumpvorgang im Speicher erzeugt wird, ist dabei proportional abhängig von der Fahrzeuggeschwindigkeit.

Eine weitere Möglichkeit, die Befüllung eines hydraulischen Druckspeichers zu steuern, wird in der EP 0 469 615 A1 beschrieben. Dabei wird aus einem Kennfeld ein oberer Grenzwert für den Druck im Druckspeicher in Abhängigkeit von der Geschwindigkeit des Fahrzeugs bestimmt. Überschreitet der Druck des Mediums im Druckspeicher diesen oberen Grenzwert, wird die Pumpe abgeschalten.

Es hat sich gezeigt, dass der Stand der Technik nicht in jeder Hinsicht optimale Ergebnisse zu liefern vermag. Gerade ein Bremseingriff bei höherer Fahrzeuggeschwindigkeit beispielsweise mit ABS-Regelung führt zu einem deutlich höheren Volumenverbrauch als bei niedrigerer Fahrzeuggeschwindigkeit. Bei sehr hohem Volumenverbrauch des Druckmediums kann somit der sicherheitskritische Fall eintreten, daß das im Bremskreis zur Verfügung stehende Volumen nicht ausreicht und die Zulieferung durch die Pumpe zu langsam erfolgt.

Damit stellt sich die Aufgabe, Verfahren und Vorrichtung bereitzustellen, durch welche zu jeder Zeit ausreichend Volumen an Druckmedium im Bremssystem des Fahrzeugs zur Verfügung steht, wodurch ebenfalls die Sicherheit erhöht wird. Dies soll mit möglichst einfachen Mitteln geschehen.

### Vorteile der Erfindung

Durch die erfindungsgemäßen Verfahren und Vorrichtung wird vorteilhafterweise vermieden, daß beispielsweise trotz Vollansteuerung des das Druckmedium fördernden Mittels das Volumen an Druckmedium während eines Bremseingriffes nicht ausreicht. Dies geschieht dadurch, daß das in wenigstens einem Bremskreis zur Verfügung stehende Volumen an Druckmedium, welches von der Ansteuerung des das Druckmedium fördernden Mittels abhängt, in Beziehung zur Geschwindigkeit des Fahrzeugs gesetzt wird. Dies bedeutet, daß zweckmäßigerweise das das Druckmedium fördernde Mittel abhängig von der Geschwindigkeit des Fahrzeugs derart angesteuert wird, daß die Geschwindigkeit des Fahrzeugs und das in dem Bremskreis zur Verfügung stehende Volumen an Druckmedium korreliert sind.

Vorteilhafterweise ist die Geschwindigkeit des Fahrzeugs und das in dem Bremskreis zur Verfügung stehende Volumen an Druckmedium derart korreliert, daß mit steigender Geschwindigkeit des Fahrzeugs, das in dem Bremskreis zur Verfügung stehende Volumen an Druckmedium erhöht wird und/oder bei fallender Geschwindigkeit des Fahrzeugs das in dem Bremskreis zur Verfügung stehende Volumen an Druckmedium erniedrigt wird.

In einer vorteilhaften Ausgestaltung wird das in dem Bremskreis zur Verfügung stehende Volumen an Druckmedium in einem mit dem Bremskreis in Verbindung stehenden Speichermittel durch das darin enthaltene Volumen an Druckmedium eingestellt und zwar derart, daß das Volumen an Druckmedium in dem Speichermittel bei steigender Geschwindigkeit des Fahrzeugs erhöht wird und/oder bei fallender Geschwindigkeit des Fahrzeugs erniedrigt wird.

Vorteilhafterweise wird dabei eine Druckgröße in dem Bremssystem ermittelt, durch welche das zur Verfügung stehende Volumen an Druckmedium ermittelbar und/oder einstellbar ist.

Weiterhin von Vorteil ist, daß die Ansteuerung des das Druckmedium fördernden Mittels abhängig von wenigstens einem vorgebbaren Schwellwert der Druckgröße aktiviert oder deaktiviert wird, wobei der Schwellenwert zweckmäßigerweise in einem Abhängigkeitsverhältnis zu der Geschwindigkeit des Fahrzeugs vorgegeben und/oder eingestellt wird.

In einer vorteilhaften Ausgestaltung wird die Ansteuerung des das Druckmedium fördernden Mittels in Abhängigkeit von der Druckgröße derart aktiviert oder deaktiviert, daß bei Erreichen und/oder Unterschreiten eines ersten Schwellenwertes der Druckgröße die Ansteuerung aktiviert und bei Erreichen und/oder Überschreiten eines zweiten Schwellenwertes der Druckgröße die Ansteuerung deaktiviert wird. Die Einschalt- bzw. Ausschaltgrenzen dieser Hysterese, werden also zweckmäßigerweise in Abhängigkeit der Fahrzeuggeschwindigkeit so variiert, daß das zur Verfügung stehende Volumen an Druckmedium auch unter Sicherheitsaspekten ausreichend ist.

Von Vorteil ist weiterhin, daß das Abhängigkeitsverhältnis von Volumen am Druckmedium und Fahrzeuggeschwindigkeit derart ausgebildet sein kann, daß aus einem Vergleich der Geschwindigkeit des Fahrzeugs mit Geschwindigkeitsschwellenwerten Fahrgeschwindigkeitsbereiche vorgegeben werden und in jedem dieser Bereiche Schwellenwerte der Druckgröße vorgebbar sind. Ebenso kann das Abhängigkeitsverhältnis vorteilhafterweise so ausgebildet sein, daß die jeweiligen Schwellenwerte der Druckgröße der Geschwindigkeit des Fahrzeugs durch eine Kennlinie bzw. ein Kennfeld zugeordnet werden. Ebenso vorteilhaft kann das Abhängigkeitsverhältnis als linearer Zusammenhang insbesondere als proportionaler Zusammenhang zwischen Fahrzeuggeschwindigkeit und Schwellenwerten der Druckgröße vorgegeben bzw. eingestellt werden.

Somit wird durch Verschiebung der Hysterese der Regelung des das Druckmedium fördernden Mittels in Abhängigkeit von der Geschwindigkeit des Fahrzeugs ein höheres Volumen an Druckmedium zu Beginn eines Bremseingriffes, insbesondere im Speicher eines elektrohydraulischen Bremssystems zur Verfügung gestellt, wodurch sichergestellt wird, daß trotz großem Volumenverbrauch an Druckmedium immer ausreichend Volumen an Druckmedium, insbesondere im Speicher, vorhanden ist.

Weitere Vorteile sind durch die kennzeichnenden Merkmale der Unteransprüche und in der Beschreibung offenbart.

### Zeichnung

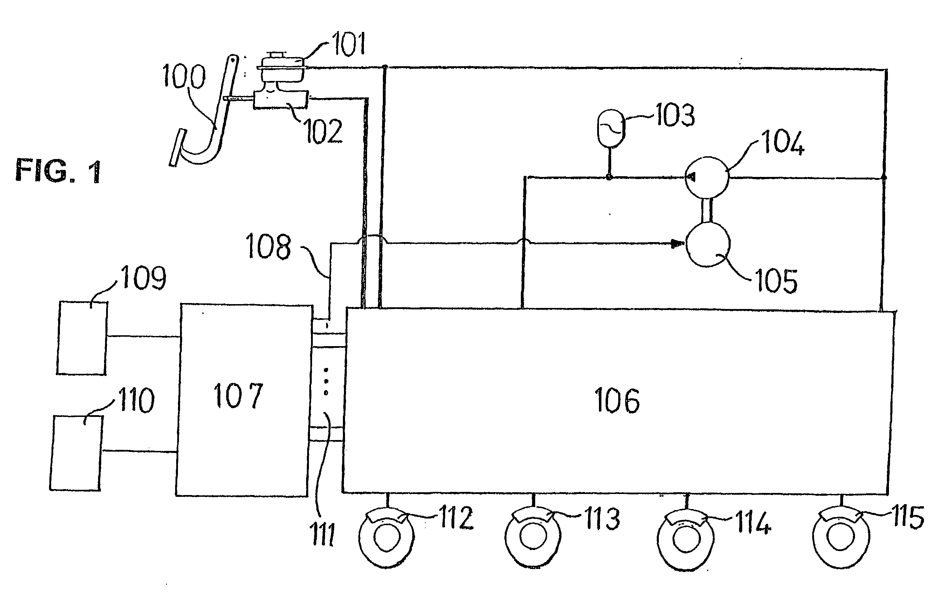

Die Erfindung wird im weiteren anhand der offenbarten Figuren der Zeichnung dargestellt. Dabei zeigt Figur 1 ein erfindungsgemäßes Bremssystem, insbesondere ein elektrohydraulisches.
Figur 2 offenbart ein Verfahren zur Ansteuerung des das Druckmedium fördernden Mittels, insbesondere mittels einer Druckgröße zugeordneten Druckschwellen. Zwei Möglichkeiten der Vorgabe der Druckschwellen sind in
Figur 3, bestehend aus Figur 3a und Figur 3b, dargestellt. Dabei ist in Figur 3a ein linearer Zusammenhang zwischen der Druckgröße und der Geschwindigkeit des Fahrzeugs gezeigt. Der Zusammenhang zwischen der Fahrzeuggeschwindigkeit und der Druckgröße ist in Figur 3b nicht linear, als weitere Möglichkeit dargestellt.
Figur 4 offenbart ein Verfahren zur Ansteuerung des das Druckmedium fördernden Mittels wobei als Vorbedingung bestimmte Geschwindigkeitsbereiche mittels Geschwindigkeitsschwellenwerten vorgegeben werden.

### Beschreibung der Ausführungsbeispiele

Figur 1 zeigt ein Bremssystem, insbesondere ein elektrohydraulisches Bremssystem, bei dem das Druckmedium, also die Bremsflüssigkeit aus einem Druckspeicher 103 über Ventile in Radbremszylinder 112 bis 115 eingesteuert wird. Aus Gründen der Übersichtlichkeit und der Allgemeingültigkeit der Verfahren und Vorrichtungen ist ein Großteil der Bremsanlage mit den Bremskreisen in Block 106 zusammengefaßt und nicht explizit dargestellt. Der Druckspeicher 103 wird mit einem das Druckmedium fördernden Mittel in Form einer Pumpe 104 geladen. In dem dargestellten Bremssystem ist ein Bremspedal 100 dargestellt, welches mit einem Hauptbremszylinder 102 in Verbindung steht. Über das Bremspedal kann Druck in dem Hauptbremszylinder 102 aufgebaut werden. Der Hauptbremszylinder 102 steht mit einem Vorratsbehälter 101 in Kontakt. Aus dem Hauptbremszylinder 102 sowie dem Vorratsbehälter 101 führen Leitungen für das Druckmedium in die Bremsanlage 106. Die Bremsanlage 106 enthält Ventilmittel und im Falle eines elektrohydraulischen Bremssystems beispielsweise einem Pedalwegsimulator sowie übrige aus dem Stand der Technik dem Fachmann bekannte Komponenten, je nach Ausführungsform des Bremssystems. In einer Leitung zwischen dem Vorratsbehälter 101 und der Bremsanlage 106 ist das das Druckmedium fördernde Mittel, in Form der Pumpe 104, dargestellt. Mit 105 ist ein Antrieb zur Betätigung der Pumpe, beispielsweise in Form eines Elektromotors, gezeigt. Zwischen der Pumpe 104 und der Bremsanlage 106 ist ein Druckspeicher 103 angebracht. Über Leitungen für das Druckmedium steht die Bremsanlage 106 mit den Radbremszylindern 112 bis 115 in Verbindung. Die Steuerung bzw. Regelung der steuerbaren bzw. regelbaren Komponenten des Bremssystems ist durch die Steuereinheit 107 repräsentiert. Die von der Steuereinheit 107 wegführenden bzw. hinführenden Verbindungen mit der entsprechenden Aktuatorik und/oder Sensorik der Bremsanlage 106, wie beispielsweise Drucksensoren, sind schematisch in Leitungsbündel 111 angedeutet. Die Ansteuerleitung 108 für den Pumpenmotor 105 ist dabei explizit dargestellt. Mit 109 ist weitere Bremssystem-externe Sensorik wie beispielsweise Raddrehzahlsensorik, Fahrzeuggeschwindigkeitssensorik, etc. dargestellt. In der sonstigen Sensorik ist auch ein möglicher Sensor für den Druck im Druckspeicher 103 umfaßt. Neben der Verwendung von Sensorelementen zur Erfassung von Druckgrößen können und ebenso ein Volumen an Druckmedium auch durch dem Fachmann bekannte Schätzverfahren ermittelt werden. Element 110 repräsentiert weitere mögliche Steuereinheiten oder eine übergeordnete Logik, welche in Verbindung mit der Steuereinheit 107 des Bremssystems stehen.

Über die Sensorik 109 werden beispielsweise Größen wie Fahrzeuggeschwindigkeit und/oder Motordrehzahl und/oder Raddrehzahl und/oder Druckgrößen und/oder Flußgrößen des Volumens an Druckmedium, usw. erfaßt. Vergleichbare Informationen können aber auch über andere Steuereinheiten 110 abgefragt und an die Steuereinheit 107 des Bremssystems übermittelt werden. Die Steuereinheiten 110 können beispielsweise ein Motorsteuergerät und/oder ein Getriebesteuergerät und/oder eine übergeordnete Logik wie eine Fahrdynamikregelung beinhalten.

Insgesamt dient das Bremssystem aber der Steuerung und/oder Regelung der Bremswirkung und/oder Fahrstabilität sowie der Sicherheit des Fahrzeugs. In der speziellen Ausführungsform eines elektrohydraulischen Bremssystems wird beim Bremseingriff Druck über Ventile aus einem Druckspeicher in die Radzangen also die Radbremszylinder eingeregelt. In diesem Druckspeicher wird somit ein bestimmtes Volumen an Druckmedium bzw. Bremsflüssigkeit gespeichert. In einer anderen Ausführungsform fehlt beispielsweise der extern zur Bremsanlage 106 dargestellte Druckspeicher 103 und das beim Bremseingriff zur Verfügung stehende Volumen an Druckmedium ist im jeweiligen Bremskreis, mit seinen Leitungen, Ventilmitteln, Zwischenspeichern und Dämpferkammern, etc. selbst vorrätig. Eine Druckgröße beispielsweise im Druckspeicher oder andern Orts in einem Bremskreis schafft dabei den Zusammenhang mit dem Volumen am Druckmedium. Damit läßt sich eine Wirkungskette beschreiben. Auch das das Druckmedium fördernde Mittel, im Ausführungsbeispiel also die Pumpe 104 beeinflußt die Druckgröße im Bremskreis bzw. wie im Ausführungsbeispiel dem Druckspeicher bzw. kann diese einstellen. Durch die Druckgröße ihrerseits ist ein Volumen an Druckmedium erfaßbar und/oder einstellbar.

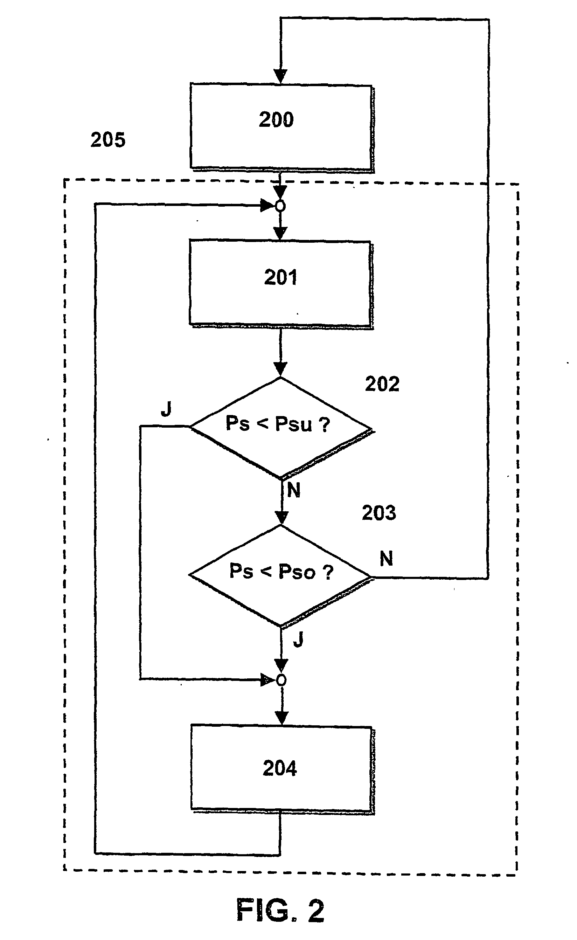

Dazu zeigt Figur 2 ein Verfahren zur Ansteuerung der Pumpe 104 bzw. des Pumpenmotors 105. In Block 200 ist oder wird die Pumpe ausgeschaltet.

Im darauffolgenden Block 201 sind für die Druckgröße Ps, beispielsweise im Druckspeicher 103, Schwellenwerte vorgebbar. In dieser speziellen Ausführungsform wird die Druckgröße Ps, insbesondere der Speicherdruck, über eine Zweipunkthystereseregelung eingeregelt. Somit wird ein unterer Schwellenwert Psu und ein oberer Schwellenwert Pso für die Druckgröße Ps vorgegeben. Dabei wird bei Unterschreiten eines bestimmten Druckniveaus, also der unteren Schwelle Psu die Pumpe eingeschaltet und bei Überschreiten eines bestimmten Druckniveaus, also des oberen Schwellenwertes Pso wieder ausgeschaltet. Aus bereits genannten Gründen erfolgt die Vorgabe der Schwellenwerte Psu sowie Pso abhängig von der Geschwindigkeit des Fahrzeugs v. Dies kann in Form von Geschwindigkeitsbereichen und diesen zugeordneten Druckschwellen ebenso wie in Form eines Kennfeldes oder wenigstens einer Kennlinie erfolgen. Da der Volumenverbrauch an Druckmedium bei einem Bremseingriff bei hoher Fahrzeuggeschwindigkeit bis zum Fahrzeugstillstand deutlich höher als bei niedriger Fahrzeuggeschwindigkeit ist, werden die Einschalt- bzw. Ausschaltgrenzen der Regelhysterese, also hier die Druckschwellenwerte Psu und Pso in Abhängigkeit der Fahrzeuggeschwindigkeit v so variiert, daß das zur Verfügung stehende bzw. gespeicherte Volumen an Druckmedium beispielsweise im Speicher oder im Bremskreis bei höherer Geschwindigkeit des Fahrzeugs größer ist, als bei niedriger Geschwindigkeit des Fahrzeugs.

In Abfrage 202 wird nun festgestellt, ob die Druckgröße Ps kleiner als der untere Schwellenwert Psu ist. Ist dies der Fall, gelangt man zu Block 204, worin die Pumpe eingeschaltet wird. Die Ansteuerung der Pumpe selbst, also z.B. Vollansteuerung oder getakteter Betrieb sowie bei getaktetem Betrieb das benötigte Pulspausenverhältnis PPV kann ebenfalls in Block 204 eingestellt werden. Wichtig ist jedoch die Verwendung der Druckschwellen Psu bzw. Pso als Einschaltbedingung der Pumpe.

Ist der Druck Ps nicht kleiner als die untere Druckschwelle Psu gelangt man zur Abfrage 203. Darin wird der zweite Schwellenwert für den Druck die obere Druckschwelle Pso abgefragt. Ist die Druckgröße Ps kleiner als die obere Druckschwelle Pso, gelangt man wieder zu Block 204 und die Pumpe wird eingeschaltet bzw. verbleibt in eingeschaltetem Zustand. Ist die obere Druckschwelle Pso erreicht oder überschritten, gelangt man zu Block 200, worin die Pumpe ausgeschaltet wird bzw. in ausgeschaltetem Zustand verbleibt.

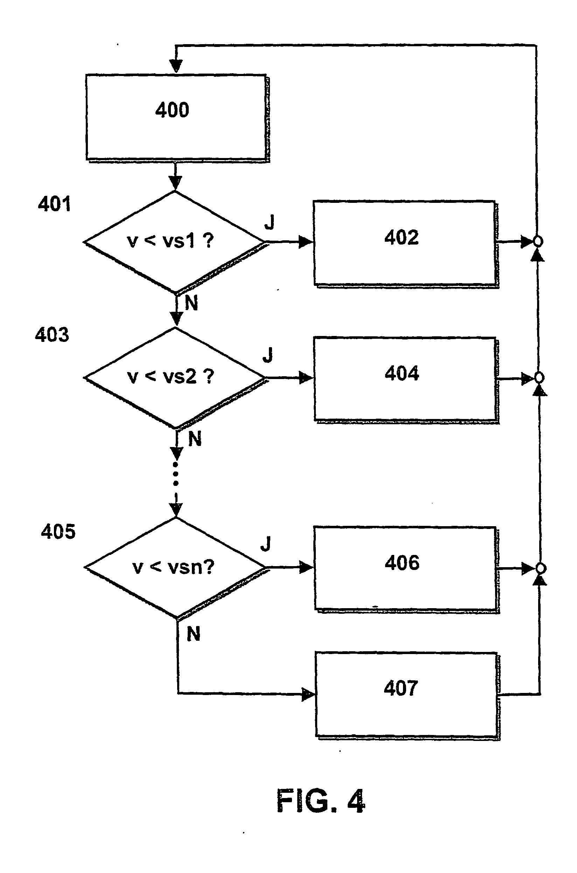

Die Schritte 201 bis 204 aus Figur 2 sind noch einmal in Block 205 zusammengefaßt, welcher später in Figur 4 optional eingesetzt werden kann. Somit wird im Verfahren in Figur 2 vermieden, daß trotz beispielsweise Vollansteuerung der Pumpe das Volumen an Druckmedium während eines Bremseingriffes nicht ausreicht, da insbesondere bei höherer Fahrzeuggeschwindigkeit die Einschaltpunkte der Regelhysterese vorteilhafterweise nach oben verschoben werden. Damit wird ein höheres Volumen an Druckmedium zum Beginn eines Bremseingriffes, insbesondere im Druckspeicher, zur Verfügung gestellt, wodurch schon vorab sichergestellt wird, daß trotz großem Verbrauch immer ausreichend Volumen an Druckmedium vorhanden ist.

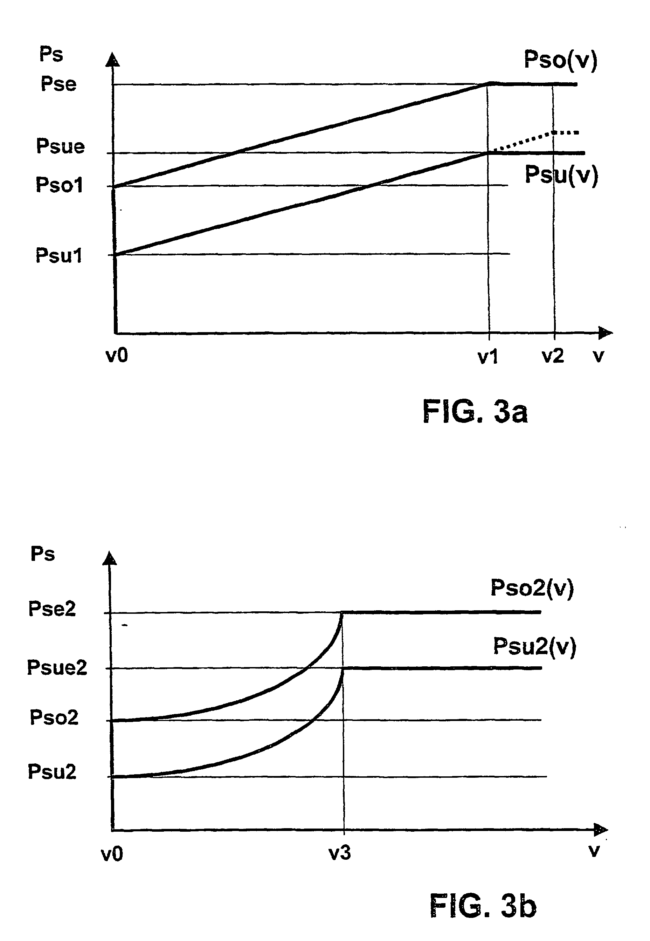

Daneben besteht jedoch auch, wie eingangs im Stand der Technik erwähnt, die Möglichkeit der Zuordnung der Druckgröße Ps zur Geschwindigkeit v des Fahrzeugs bzw. der Schwellenwerte Psu und Pso in Form von Kennlinien, wie es beispielsweise in den Figuren 3a und 3b dargestellt ist. Diese Kennlinien könnten beispielsweise in Block 201 von Figur 2 bei der Vorgabe der Schwellenwerte Pso und Psu zugrunde gelegt werden. In Figur 3a ist ein linearer Zusammenhang zwischen der Fahrgeschwindigkeit v und der Druckgröße Ps dargestellt. Bei einer Mindestgeschwindigkeit v0, die insbesondere Null also dem Fahrzeugstillstand entspricht, werden die Startwerte der Schwellen für den Druck Psu1 und Pso1 vorgegeben. Ausgehend von diesen Startwerten werden mit steigender Fahrzeuggeschwindigkeit v auch die Werte der jeweiligen Druckschwellen Pso bzw. Psu erhöht. Bis schließlich bei einer Geschwindigkeit v1 ein Endwert Pse für die Druckgröße Ps erreicht ist. Dies kann einerseits ein vorgebbarer variabler Endwert sein oder aber die Druckgrenze des Bremssystems selbst bzw. des Druckspeichers oder des schwächsten Gliedes des Bremskreises aufgrund der mechanischen Belastung. Dabei verlaufen die Kennlinien Pso(v) und Psu(v) parallel zueinander, d.h. die Hysterese an sich wird konstant gehalten. Denkbar wäre auch beispielsweise die untere Schwelle Psu also als Kennlinie Psu(v) auf dem konstanten Wert Psu1 zu belassen und lediglich die obere Schwelle Pso zu erhöhen. Dadurch wäre aber der Energieverbrauch der Pumpe da der Gesamtzeitraum in welchem die Pumpe eingeschaltet wäre erhöht würde, sehr hoch. Deshalb bietet sich vorteilhafterweise an, die Regelhysterese also sprich den Abstand zwischen oberer und unterer Druckschwelle höchstens kleiner als den voreingestellten Abstand zwischen Psu1 und Pso1 aber nicht größer werden zu lassen. Diese mögliche Verringerung des Abstandes ist in Figur 3a durch die gepunktete Kennlinie dargestellt. Diese Verringerung kann aber nicht erst bei v1 sondern auch schon vorher erfolgen. Allerdings sollte andererseits der Abstand der Schwellenwerte, also die Hysterese nicht zu gering werden, da sonst schon beispielsweise aufgrund einer Abkühlung des Druckmediums und damit fallendem Druck im Druckmedium die Pumpe in Betrieb gesetzt würde, was ebenfalls zu einer erhöhten Belastung des Bordnetzes durch den Energieverbrauch der Pumpe führen würde. Auch eine Verringerung der Hysterese so weit, daß schließlich nur noch eine Schwelle existiert würde aufgrund des ständigen Ein- und Ausschaltens der Pumpe bei Regelung auf die eine Schwelle zu starken Bordnetzschwankungen und damit zu großer Belastung des Bordnetzes führen. Somit wird bei Psu(v) der untere Schwellenwert Psu ab einer Geschwindigkeit v1 nicht mehr erhöht. Bei einer gewünschten weiteren Verringerung der Hysterese, wie gepunktet dargestellt, bleibt Psu(v) dann ab der vorgebbaren Geschwindigkeit v2 konstant. Zweckmäßigerweise kann also die Hysterese, also der Abstand von Einschaltdruck Psu zu Ausschaltdruck Pso, in Figur 3a konstant gehalten werden, wobei durch die untere Schwelle Psu ein Endwert Psue erreicht wird für den demnach gilt Pso1 - Psu1 = Pse - Psue.

Die Überlegungen von Figur 3a gelten analog für Figur 3b. Darin ist nun ein nichtlinearer Zusammenhang zwischen der Druckgröße Ps und der Fahrgeschwindigkeit v dargestellt. Ausgehend von einer Geschwindigkeit v0, welche insbesondere Null, also dem Fahrzeugstillstand entspricht, werden die Schwellenwerte ausgehend von den Startwerten Psu2 und Pso2 bis zur Fahrzeuggeschwindigkeit v3 erhöht. Die Kennlinie Pso2(v) geht bei v3 dann in den konstanten Wert Pse2 als Endwert über. Dies kann wie bei Figur 3a der Belastungsgrenze des Systems oder einem vorgebbaren Endwert entsprechen. Ebenso geht die Kennlinie Psu2(v)für den unteren Schwellenwert Psu2 bei Geschwindigkeit v3 in einen konstanten Wert Psue2 über. Die Überlegungen zu Vergrößerung und Verringerung der Hysterese gelten analog zu Figur 3a. Der nichtlineare Verlauf der Druckgröße Ps bzw. der Kennlinien Psu2(v) und Pso2(v) über der Geschwindigkeit v kann somit ebenfalls in Block 201 in Figur 2 der Vorgabe der Schwellenwerte Psu bzw. Pso zugrundegelegt werden.

Figur 4 zeigt nun anhand eines Flussdiagramms ein weiteres Beispiel, wie eine Pumpe in Abhängigkeit der Fahrgeschwindigkeit v angesteuert werden kann. Dieser Ablauf kann ebenso wie Figur 2 als Programmcode in einer Steuereinheit oder auf einem Datenspeicher, also in Software oder als festverdrahtete Logik in Hardware realisiert sein. Im Block 400 wird die Pumpe ausgeschaltet bzw. bleibt ausgeschaltet. Ebenso wird in Block 400 die Geschwindigkeit v des Fahrzeugs ermittelt. Dies kann mittels direkter Fahrgeschwindigkeitssensorik oder auch aus indirekter Sensorik bzw. Information, wie z.B. Raddrehzahlsensoren oder der Motordrehzahl oder einer Achsendrehzahl, etc. erfolgen. Die Vorgabe von Fahrgeschwindigkeitsschwellenwerten vs1 bis vsn kann aus einer situationsabhängigen Tabelle oder einer Kennlinie erfolgen. Dabei können durch Fahrversuche und/oder Simulationen und/oder aus Erfahrungswerten sinnvolle Geschwindigkeitsbereiche vorgegeben werden, welche zusätzlich adaptiv im Fahrbetrieb selbst anpaßbar sind. Wie gerade beschrieben sind auch die Druckschwellen in Figur 2 vorgebbar. Dies bedeutet, daß die Vorgabe der Geschwindigkeitsschwellen im Prinzip vergleichbar mit der Vorgabe der Druckschwellen in Figur 2 erfolgen kann.

In Abfrage 401 wird nun überprüft, ob die ermittelte Fahrgeschwindigkeit v kleiner als ein Schwellenwert vs1 ist. Ist dies der Fall, wird in diesem ersten Geschwindigkeitsbereich bis vs1 eine Pumpenansteuerung nach Block 402 durchgeführt. Darin kann einerseits die Pumpe voll angesteuert werden bis ein Volumen V1 an Druckmedium erreicht ist. Ebenso kann in Block 402 aber ein Pulspausenverhältnis PPV1 für die Pumpenansteuerung im ersten Geschwindigkeitsbereich bis vs1 vorgegeben werden. Ist die erste Geschwindigkeitsschwelle Vs1 erreicht oder überschritten, gelangt man zur Abfrage 403. In Abfrage 403 erfolgt die Überprüfung auf eine zweite Fahrgeschwindigkeitsschwelle vs2. Ist diese noch nicht erreicht, gelangt man zu Block 404. In diesem zweiten Geschwindigkeitsbereich von vs1 bis vs2 wird nun in Block 404 die Pumpe eingeschaltet bis ein Volumen V2 an Druckmedium erreicht ist. Analog zu Block 402 kann aber auch hier ein Pulspausenverhältnis PPV2 zur Pumpenansteuerung vorgegeben werden. Ist die Geschwindigkeitsschwelle vs2 erreicht oder überschritten, gelangt man in den nächsten Geschwindigkeitsbereich. Dies setzt sich bis zu einer letzten Schwelle vsn fort. In Abfrage 405 wird überprüft, ob diese letzte Geschwindigkeitsschwelle vsn durch die Fahrgeschwindigkeit v erreicht oder überschritten wurde. Ist vsn noch nicht erreicht, gelangt man zu Block 406. Hier wird nun die Pumpe eingeschaltet bis ein Volumen V3 erreicht ist. Ebenso kann hier ein Pulspausenverhältnis PPV3 vorgegeben werden. Ist die letzte Geschwindigkeitsschwelle vsn überschritten bzw. erreicht, gelangt man zu Block 407, worin die Einschaltzeit der Pumpe derart festgelegt wird, daß ein Volumen V4 erreicht wird. Wie in Block 402, 404, 406 wird in Block 407 das jeweilige Volumen an Druckmedium entweder durch Vollansteuerung möglichst schnell erreicht oder es kann andererseits durch Vorgabe eines Pulspausenverhältnisses PPV hier PPV4 die Zeit bis zum Erreichen des gewünschten Volumens an Druckmedium z.B. unter Geräusch- und/oder Belastungsgesichtspunkten eingestellt werden. Nach dem Erreichen des jeweiligen Volumens in Block 402, 404, 406 sowie 407 gelangt man wieder zu Block 400, worin die Pumpe ausgeschaltet wird.

In einer speziellen Ausführungsform kann in den Blöcken 402, 404, 406 und 407 auch ein Ablauf gemäß Block 205 aus Figur 2 eingebracht werden. Die darin vorzugebenden, auszuwertenden Größen können dann abhängig vom jeweiligen Geschwindigkeitsbereich des Fahrzeugs individuell eingestellt werden. Dies betrifft insbesondere die Druckschwellwerte Psu und Pso je Geschwindigkeitsbereich.

## Patentansprüche

1. Verfahren zur Ansteuerung eines ein Druckmedium in einem Bremssystem fördernden Mittels in einem Fahrzeug, wobei
- das Druckmedium in wenigstens einem Bremskreis des Bremssystems gefördert wird und
- ein in dem Bremskreis zur Verfügung stehendes Volumen an Druckmedium von der Ansteuerung des das Druckmedium fördernden Mittels (104) abhängt und
- eine Druckgröße in dem Bremssystem ermittelt wird, durch die das Volumen an Druckmedium ermittelbar und/oder einstellbar ist und
- die Ansteuerung des das Druckmittel fördernde Mittel (104) abhängig von wenigstens einem vorgebbaren Schwellenwert der Druckgröße aktiviert oder deaktiviert wird,
wobei der wenigstens eine Schwellenwert in Abhängigkeit von der Geschwindigkeit des Fahrzeugs vorgebbar bzw. einstellbar ist, und
- die Ansteuerung des das Druckmittel fördernde Mittel (104) und somit das im Bremskreis zur Verfügung stehende Volumen an Druckmedium abhängig von der Geschwindigkeit des Fahrzeugs erfolgt,
- aus einem Vergleich der Geschwindigkeit des Fahrzeugs mit Geschwindigkeitsschwellenwerten Geschwindigkeitsbereiche vorgegeben werden,
**dadurch gekennzeichnet, dass**
in jedem Geschwindigkeitsbereich wenigstens ein Schwellenwert der Druckgröße vorgegeben ist.

2. Verfahren nach Anspruch 1, **dadurch gekennzeichnet, dass** in jedem Geschwindigkeitsbereich das Druckmedium fördernde Mittel (104) derart angesteuert wird, dass in dem Geschwindigkeitsbereich ein vorgebbares Volumen an Druckmedium in den Bremskreis gefördert wird.

3. Verfahren nach Anspruch 1, **dadurch gekennzeichnet, dass** die Ansteuerung des Druckmedium fördernden Mittels (104) zur Bereitstellung eines während eines Bremseingriffs ausreichenden Volumens an Druckmedium zum Beginn des Bremseingriffs abgeschlossen ist.

4. Verfahren nach Anspruch 1, **dadurch gekennzeichnet, daß** die Geschwindigkeit des Fahrzeugs und das in dem Bremskreis zur Verfügung stehende Volumen an Druckmedium derart korreliert sind, daß mit steigender Geschwindigkeit des Fahrzeugs das in dem Bremskreis zur Verfügung stehende Volumen an Druckmedium erhöht wird und/oder bei fallender Geschwindigkeit des Fahrzeugs das in dem Bremskreis zur Verfügung stehende Volumen an Druckmedium erniedrigt wird.

5. Verfahren nach Anspruch 1, **dadurch gekennzeichnet, daß** das in dem Bremskreis zur Verfügung stehende Volumen an Druckmedium in einem mit dem Bremskreis in Verbindung stehenden Speichermittel (103) für das Druckmedium durch das in dem Speichermittel (103) enthaltene Volumen an Druckmedium einstellbar ist und daß das Volumen an Druckmedium in dem Speichermittel (103) bei steigender Geschwindigkeit des Fahrzeugs erhöht wird und/oder bei fallender Geschwindigkeit des Fahrzeugs erniedrigt wird.

6. Verfahren nach Anspruch 1, **dadurch gekennzeichnet, daß** eine Druckgröße in dem Bremssystem ermittelt wird, durch die das Volumen an Druckmedium ermittelbar und einstellbar ist und daß die Ansteuerung des das Druckmedium fördernden Mittels (104) derart aktiviert oder deaktiviert wird, daß bei Erreichen und/oder Unterschreiten eines ersten Schwellenwertes der Druckgröße die Ansteuerung aktiviert und bei Erreichen und/oder Überschreiten eines zweiten Schwellenwertes der Druckgröße die Ansteuerung deaktiviert wird, wobei die Schwellenwerte in Abhängigkeit von der Geschwindigkeit des Fahrzeugs vorgegeben bzw. eingestellt werden.

7. Vorrichtung zur Ansteuerung eines ein Druckmedium in einem Bremssystem fördernde Mittels in einem Fahrzeug, wobei
- das Druckmedium in wenigstens einem Bremskreis des Bremssystems gefördert wird und
- ein in dem Bremskreis zur Verfügung stehendes Volumen an Druckmedium von der Ansteuerung des das Druckmedium fördernden Mittels (104) abhängt und
- Mittel (109) vorgesehen sind, die eine Druckgröße in dem Bremssystem erfassen, durch die das Volumen an Druckmedium ermittelbar und/oder einstellbar ist und
- die Ansteuerung des das Druckmittel fördernde Mittel (104) abhängig von wenigstens einem vorgebbaren Schwellenwert der Druckgröße aktiviert oder deaktiviert wird,
wobei der wenigstens eine Schwellenwert in Abhängigkeit von der Geschwindigkeit des Fahrzeugs vorgebbar bzw. einstellbar ist, und
- die Ansteuerung des das Druckmittel fördernde Mittel (104) und somit das im Bremskreis zur Verfügung stehende Volumen an Druckmedium abhängig von der Geschwindigkeit des Fahrzeugs erfolgt,
- wenigstens zwei Geschwindigkeitsbereiche vorgesehen sind, die in Abhängigkeit von Geschwindigkeitsschwellen vorgegeben sind,
**dadurch gekennzeichnet, dass**
Mittel (106) vorgesehen sind, die jedem Geschwindigkeitsbereich wenigstens ein Schwellenwert der Druckgröße vorgeben.

## Claims

1. Method for activating a means conveying a pressure medium in a brake system, in a vehicle,
- the pressure medium being conveyed in at least one brake circuit of the brake system, and
- a volume of pressure medium available in the brake circuit being dependent on the activation of the means (104) conveying the pressure medium, and
- a pressure variable, by means of which the volume of pressure medium can be determined and/or can be set, being determined in the brake system, and
- the activation of the means (104) conveying the pressure medium being activated or deactivated as a function of at least one predeterminable threshold value of the pressure variable, the at least one threshold value being capable of being predetermined or of being set as a function of the speed of the vehicle, and
- the activation of the means (104) conveying the pressure medium and therefore the volume of pressure medium available in the brake circuit taking place as a function of the speed of the vehicle,
- speed ranges being predetermined from a comparison of the speed of the vehicle with speed threshold values,
**characterized in that** at least one threshold value of the pressure variable is predetermined in each speed range.

2. Method according to Claim 1, **characterized in that** the means (104) conveying pressure medium is activated in each speed range in such a way that a predeterminable volume of pressure medium is conveyed into the brake circuit in the speed range.

3. Method according to Claim 1, **characterized in that** the activation of the means (104) conveying pressure medium in order to provide a volume of pressure medium sufficient during brake action is concluded at the start of the brake action.

4. Method according to Claim 1, **characterized in that** the speed of the vehicle and the volume of pressure medium available in the brake circuit are correlated in such a way that, with a rising speed of the vehicle, the volume of pressure medium available in the brake circuit is increased and/or, with a falling speed of the vehicle, the volume of pressure medium available in the brake circuit is lowered.

5. Method according to Claim 1, **characterized in that** the volume of pressure medium available in the brake circuit can be set, in an accumulator means (103) for the pressure medium which is connected to the brake circuit, by means of the volume of pressure medium contained in the accumulator means (103), and **in that** the volume of pressure medium in the accumulator means (103) is increased with a rising speed of the vehicle and/or is lowered with a falling speed of the vehicle.

6. Method according to Claim 1, **characterized in that** a pressure variable, by means of which the volume of pressure medium can be determined and can be set, is determined in the brake system, and **in that** the activation of the means (104) conveying the pressure medium is activated or deactivated in such a way that activation is activated when a first threshold value of the pressure variable is reached and/or undershot and activation is deactivated when a second threshold value of the pressure variable is reached and/or overshot, the threshold values being predetermined or set as a function of the speed of the vehicle.

7. Device for activating a means conveying a pressure medium in a brake system, in a vehicle,
- the pressure medium being conveyed in at least one brake circuit of the brake system, and
- a volume of pressure medium available in the brake circuit being dependent on the activation of the means (104) conveying the pressure medium, and
- means (109) being provided which detect in the brake system a pressure variable by means of which the volume of pressure medium can be determined and/or can be set, and
- the activation of the means (104) conveying the pressure medium being activated or deactivated as a function of at least one predeterminable threshold value of the pressure variable, the at least one threshold value being capable of being predetermined or of being set as a function of the speed of the vehicle, and
- the activation of the means (104) conveying the pressure medium and therefore the volume of pressure medium available in the brake circuit taking place as a function of the speed of the vehicle,
- at least two speed ranges being provided which are predetermined as a function of speed thresholds,
**characterized in that** means (106) are provided which predetermine at least one threshold value of the pressure variable for each speed range.

## Revendications

1. Procédé de commande d'un moyen transportant un fluide sous pression dans un système de freinage d'un véhicule, selon lequel :
- le fluide sous pression est transporté dans au moins un circuit de freinage du système de freinage,
- un volume du fluide sous pression disponible dans le circuit de freinage dépend de la commande du moyen (104) transportant le fluide sous pression,
- une grandeur de pression est déterminée dans le système de freinage pour pouvoir déterminer et/ou ajuster le volume du fluide sous pression,
- la commande du moyen (104) transportant le fluide sous pression est activée ou désactivée en fonction d'au moins une valeur de seuil prédéterminable de la grandeur de pression,
- l'au moins une valeur de seuil est prédéterminée ou ajustée en fonction de la vitesse du véhicule,
- la commande du moyen (104) transportant le fluide sous pression ainsi que du volume de fluide sous pression disponible dans le circuit de freinage s'effectue en fonction de la vitesse du véhicule, et
- on prédétermine des plages de vitesses à partir d'une comparaison de la vitesse du véhicule avec des valeurs de seuil de vitesse,
**caractérisé en ce que**
dans chaque plage de vitesses, au moins une valeur de seuil de la grandeur de pression est prédéterminée.

2. Procédé selon la revendication 1,
**caractérisé en ce que**
dans chaque plage de vitesses, le moyen (104) transportant le fluide sous pression est commandé pour transférer dans chaque plage de vitesses, un volume prédéterminé de fluide sous pression dans le circuit de freinage.

3. Procédé selon la revendication 1,
**caractérisé en ce que**
la commande du moyen (104) transportant le fluide sous pression pour prévoir un volume suffisant de fluide sous pression pendant une intervention de freinage est réglée au début de cette intervention de freinage.

4. Procédé selon la revendication 1,
**caractérisé en ce que**
la vitesse du véhicule et le volume du fluide sous pression disponible dans le circuit de freinage sont corrélés de telle sorte que, lorsque la vitesse du véhicule augmente, le volume du fluide sous pression disponible dans le circuit de freinage augmente et/ou, lorsque la vitesse du véhicule diminue, le volume du fluide sous pression disponible dans le circuit de freinage diminue.

5. Procédé selon la revendication 1,
**caractérisé en ce que**
le volume du fluide sous pression disponible dans le circuit de freinage peut être ajusté dans un moyen d'enregistrement (103) du fluide sous pression se trouvant en liaison avec le circuit de freinage par le volume du fluide sous pression contenu dans le moyen d'enregistrement (103), et le volume du fluide sous pression dans le moyen d'enregistrement (103) est augmenté lorsque la vitesse du véhicule augmente et/ou est diminué lorsque la vitesse du véhicule diminue.

6. Procédé selon la revendication 1,
**caractérisé en ce qu'**
une grandeur de pression déterminée dans le système de freinage permet de déterminer et d'ajuster le volume du fluide sous pression, et la commande du moyen (104) transportant le fluide sous pression est activée ou désactivée de telle sorte que, lorsque la grandeur de pression atteint et/ou dépasse par le bas une première valeur de seuil, la commande est activée et, lorsque la grandeur de pression atteint et/ou dépasse par le haut une seconde valeur de seuil, la commande est désactivée, les valeurs de seuil étant prédéterminées ou ajustées en fonction de la vitesse du véhicule.

7. Dispositif de commande d'un moyen transportant un fluide sous pression dans un système de freinage d'un véhicule, dans lequel :
- le fluide sous pression est transporté dans au moins un circuit de freinage du système de freinage,
- un volume du fluide sous pression disponible dans le circuit de freinage dépend de la commande du moyen (104) transportant le fluide sous pression,
- des moyens (109) sont prévus pour saisir une grandeur de pression dans le système de freinage pour pouvoir déterminer et/ou ajuster le volume du fluide sous pression,
- la commande du moyen (104) transportant le fluide sous pression est activée ou désactivée en fonction d'au moins une valeur de seuil prédéterminable de la grandeur de pression,
- l'au moins une valeur de seuil est prédéterminée ou ajustée en fonction de la vitesse du véhicule,
- la commande du moyen (104) transportant le fluide sous pression ainsi que du volume de fluide sous pression disponible dans le circuit de freinage s'effectue en fonction de la vitesse du véhicule, et
- au moins deux plages de vitesses sont prévues et prédéterminées en fonction des seuils de vitesse,
**caractérisé en ce que**
des moyens (106) sont prévus pour prédéterminer, dans chaque plage de vitesses, au moins une valeur de seuil de la grandeur de pression.
